# EUROPEAN PATENT APPLICATION

(11) **EP 4 498 651 A1**
(43) Date of publication of application: **29.01.2025**
(21) Application number: 23187742.4
(22) Date of filing: 26.07.2023
(51) Int. Cl.: H04L 41/0895, H04L 41/5051, H04L 41/50, H04L 41/342

(54) **TECHNIQUES TO SET UP NETWORK AS A SERVICE INTO CLOUD ENVIRONMENTS**

(71) Applicant: Deutsche Telekom AG, 53113 Bonn (DE)
(72) Inventor: Belschner, Jakob, 60322 Frankfurt am Main (DE); Seul, Georg, 50823 Köln (DE); Budzinski, Willi, 50226 Frechen (DE)
(74) Representative: Braun-Dullaeus Pannen Emmerling Patent- & Rechtsanwaltspartnerschaft mbB

(57) **Abstract**

Techniques of setting up a network slice in a networkbetween a UE and a VPC of a customer within the cloud of a cloud provider comprising the following steps:
Providing a connectivity-management entity of claim 1,
wherein a cloud-slice management API of the connectivity-management entity offers available network slice specifications of the network , wherein a first network slice specification is selected from the available network slice specifications and wherein a request of the first network slice specification is sent to the cloud-slice management API, in particular by using a configurations means, wherein the cloud-slice management API forwards the request to a slice-service-orchestration module of the connectivity-management entity , wherein the slice-service-orchestration module provides a first communication interface to the network of a network operator,
wherein the slice-service-orchestration module sends signals to the network so that the network starts a set-up process of the first network slice with the first specification.

## Description

The invention relates to a method, communication system, a connectivity-management entity and a network-slice-configuration system.

Telecommunication networks, in particular mobile networks based on 5G or previous generations, offer a variety of services to B2B as well as B2C customers, which can also be named users. In the area of B2B, users have the option to use products, which create an isolated, user specific network solution inside a connectivity service providers (CSP) network or in a cloud of the service provider, in particular in the public cloud of an enterprise. As an example of such a public cloud is AWS.

Examples of these (specific) networks solutions are:
- Customer specific DNNs (Data Network Names) / APNs (Access Point Names),
- Private 5G Networks / Campus Networks, and/or
- Customer specific Network Slices.

These networks have in common that they are isolated from the mass market B2C and other B2B services, esp. in terms of traffic segregation. As a consequence, these specific network solutions typically show private IP address ranges that are used in these networks.

Such networks are typically offered as "Network as a Service" (NaaS) products.

Today the management of connectivity between mobile apps & services or content in the customer's cloud is often complex & clumsy because there are multiple, non-aligned administration points (Cloud provider, (Mobile) network operator, Mobile Device Management, etc.) whose consistency is difficult to ensure as changes in one part may have impact on others. The lack of speed and automation increases the problem even more. With the roll-out of 5G network slicing, flexible and dynamic policies need to be considered as well.

NaaS products, as offered today, terminate at the edge (often also called border) of the network of the network operator before entering the cloud environment of the customer. In that sense the telecommunication network of the network operator is being used by customers to access his NaaS products offered from within the cloud environment of the cloud service provider. This means, the telecommunication communication service is offered between an UE of the user/customer (e.g., a smartphone) and a termination point in the communication service provider's (CSP's) network (typically the User Plane Function - UPF). The CSP is the network provider, in particular the mobile network provider.

However, to provide a useful service to customers, the NaaS product must be connected securely to the provider of the cloud environment. Typically, a VPN tunnel between the UE and the cloud environment of the service provider is set up. The process can be initiated via the CSP's Customer-Self-Care Portal or Sales Representative where the Enterprise can provide further details regarding the termination point within the cloud environment, like the reachable IP range at the customer site, private data network name, Mobile Device IP range etc. Based on that information the CSP can set up the VPN-tunnel. However, this is not a fully automated task but requires further direction of the user, the CSP and/or the service provider of the cloud environment. Additionally, VPN "secrets" like usernames and passwords need to be exchanged. Based on the configuration, the respective VPN-endpoint in the customer's cloud tenant is set up by the admin of the customer, in particular, the customer is an enterprise. As such an enterprise often employs big cloud providers (like AWS), the configuration is typically done in the cloud-provider's management console where all cloud services of the enterprise are managed.

In addition, the enterprise also needs to manage mobile devices, mobile applications and related SIM subscribers to use the mobile connectivity and/or the access the NaaS products. Typically, the enterprises use dedicated Mobile-Device-Management tools for that task. For that purpose they define policies describing, which application on which mobile device can use which network slice / private mobile IPVPN to provide the best experience for the user of the mobile device.

Apart from classical B2B mobile devices also scenarios where the mobile device is owned by a separate party need to be considered, for instance in bring-your-own-device- or B2B2X scenarios.

To summarize the state of art, today various administration points are needed to manage mobile connectivity from the UE to the customers cloud environment, e.g. Cloud console, CSP Customer-Self-Care Portal, Mobile Device Management. Also decoupled workflows, manual tasks and additional parties are involved.

In the view of above, it is an object of the invention to provide efficient means to set up NaaS products for a user in a cloud environment.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter-changeable under appropriate circumstances and that the embodiments of the invention described herein are capable of operation in other sequences than described or illustrated herein.

According to a first aspect of the invention, a connectivity-management entity is disclosed that can be used to set up and/or manage network slices of a network. The connectivity-management entity can be implemented in one physical computing unit with one or more memory modules and processor modules or distributed in multiple physical computing units with the associated memory and processor modules. The connectivity-management entity comprises:
- a slice-service-orchestration module, wherein the slice-service-orchestration module provides a first communication interface to a network of a network operator, wherein the slice-service-orchestration module is configured to send signals or commands to the network so that the network starts a set-up process of a first network slice according to a first specification;
- a cloud-slice management API, wherein the cloud-slice management API provides a second communication interface to configuration means, wherein the cloud-slice management API is configured to expose available network slice specification to the configuration means and/or wherein the cloud-slice management API is configured to receive a request of a network slice having the first specifications and forwards the first specification to the slice-service-orchestration module.

This provides the advantage that an enterprise customer, or an application, and/or a UE can select out of the available network slice specifications the one network slice that matches his or its demands and can order that this network slice is being established, in particular between the UE and a VPC of the customer within the cloud of cloud provider, by only using a single point of administration, namely the cloud-slice management API. Is is even possible that the connectivity-management entity has access to networks of different network operators, in particular by using appropriate credentials, so that the enterprise customer can set up network slices according to his demands of different network operators in different networks. In this case, the different network operators expose those network slice specifications that are available in their network, in particular at a certain location and/or time point. This is due to the fact that the availability of network slices can change with location and/or time.

In an embodiment, the connectivity-management entity is located within the environment of the network of a first network operator and is controlled by the first network operator.

This provides the advantage that no external entity can trigger setting up network slices or changing network slices within the network of the network provider. In particular, no credentials of network provider are needed that enable the permission to set up and/or change network slice.

In an embodiment, the connectivity-management entity comprises a customer-self-care UI module as a configuration means. The customer-self-care UI module can be provided to the customer via a web interface.

This enables that the customer is able to select the first specification of the network slice without the need to implement its own configuration means that has a communication interface to the cloud-slice management API. All happens inside the connectivity-management entity and the only thing the customer needs is a standard computer to order the appropriate network slice.

In an embodiment, the exposed available network slice and/or the requested first specifications corresponds to a common standard, in particular according to a TMF-620 and/or a TMF-622 product catalogue.

This provides the advantage that the common standard can be used easily across multiple networks of different network providers if they all did agree to use that common standard without having to adapt the respective APIs, network slice selecting algorithms and/or configuration means.

In an embodiment, the first specifications of the first network slice comprise QoS requirements, information to set up a VPN tunnel, slice openness flags and/or IP addresses.

This provides a great flexibility to set up a network slice that can be tailored to the needs of the customer. For example, a banking application generally needs high encryption standards but low bandwidth values, whereas network slice for a video streaming app can be set up provide a high bandwidth. The VPN tunnel can be set up to provide an encrypted communication between the UE and the VPC of the customer inside the cloud of the cloud provider. For that purpose, it might be necessary to share service credentials and/or IP addresses of the NaaS product/APP inside the VPC.

In an embodiment, application policies are provided via the cloud-slice management API, wherein the application policies comprise information which APP, UE, user and/or IMSI is allocated to which network slice, in particular to the first network slice. The APP can be identified by an APP-ID, the UE can be identified by a UE-ID, the user can be identified by credentials like password and username, The IMSI is related to the (e)SIM module that can be used to provide mobile connectivity of the UE.

This provides the advantage that the customer can set up multiple network slices with different properties and assign the APP, UE, user and/or IMSI to different network slices, which meet the individual requirements. For example, users of the customer which are associated to secrets of the enterprise are assigned to a network slice that uses a VPN tunnel. Different applications, even if they are implemented on the same UE, can have different QoS requirements and can hence be assigned accordingly. For that purpose, the network can return, after the network slices are being set up, network identifiers which are associated to the different network slices so that the customer can set up the policy accordingly, for example: network returns that the first slice - having a high bandwidth - has the network slice ID SD "x1" it can assign a video streaming app having the APP-ID "y1" to SD "x1".

In an embodiment, the application policies and/or the first specifications are adjusted dynamically. This dynamic adjustment can be done by using the configuration means accordingly. It is possible that the customer uses the configuration means manually or that the script is being implemented on the UE that instructs the configuration means accordingly what directly contacts the cloud-slice management API. The dynamic adjustment of the application policy and/or of the first specifications can be triggered due to time points, due to location or due to using different apps on the UE. For example, if it is known that certain time points in high traffic situations occur it can make sense to change the policy so that an application uses a slice with lower QoS values. Or it can happen that different apps that run on the UE require different QoS values.

According to a second aspect of the invention a network-slice-configuration system is disclosed comprising
- the connectivity-management entity described above;
- configuration means, wherein the configuration means are configured to obtain network slice specification and/or to send a request of a network slice having the first specification to the cloud-slice management API.

Configuration means can comprise: a mobile device management module of a device management entity, a UE, and/or a SCM API consumer implementation of a cloud provider.

The configuration means, - that can be named external configurations means as they are not part of the connectivity-management entity - having a communication interface to the cloud-slice management API provides the advantage that customers can access the cloud-slice management API in a flexible way to obtain available network slices specifications and/or to request selected network slice specification and/or to provide appropriate application policies. The configuration means can be a mobile device management module of a device management entity, a UE, and/or to a SCM API consumer implementation of a cloud provider. The UE can be configured to directly communicate with the cloud-slice management API or indirectly via the mobile device management module.

In an embodiment, the first specification of the first network slice is specified by user/customer input and/or first specifications are automatically provided by an app of the UE and/or by an operating system of the UE. The configuration means can be configured as to show the available network slices to the customer, for example by using a display device. The configuration means can also comprise input means so that the customer can make a selection of the first network slice.

According to a third aspect of the invention, a communication system is disclosed that comprises
- the network-slice-configuration system described above;
- a network of a network operator; wherein the first network slice is set-up within the network;
- a cloud of a cloud provider, wherein a VPC of a customer is instantiated within the cloud to provide a service, in particular a NaaS product, to the costumer; the customer can run applications in the VPC;
- a UE configured to run a service and/or an APP, in particular an APP of the customer;
wherein the first network slice with the first specifications of the network provides a communication link between the UE and the VPC of a customer. In particular, the NaaS product can be reached by this first network slice. In particular, the first network slice can terminate at a VPN GW at the border of the VPC.

In an embodiment, the network is configured to adjust properties of its RAN network, its core network and/or its transport network in the set-up process according to the first specifications. In particular, if all three, namely the RAN network, the core network and the transport network are being configured accordingly, it is possible to guarantee the properties of the first network slice all the way from the UE to the VPC.

In an embodiment, the specification of the first network slice are set to match communication properties, in particular properties of a second network slice, of the VPC. For example, it is possible that VPC is also set up according to the principles of network slicing. In this case it makes sense to align the properties of a communication link, namely the first network slice, from the UE to the VPC with the properties of the communication link, namely the second network slice, from the VPC to the APP or NaaS product. The rationale behind this shall be illustrated in an example: If the second network slice is only being able to provide a bandwidth of 50 Mbit/s then it makes no sense that the first network slice is being set up to provide a bandwidth of 100 Mbit/s because the second network slice is not being able to provide 100 Mbit/s. In this case it makes sense to a first specification of the first network slice to provide a bandwidth of "only" 50 Mbit/s to save transport resources of the network. Information about the capabilities of the second network slice can be obtained from the cloud provider or can even be measured during communication.

In an embodiment, the first specification is set to meet the highest requirements possible regarding QoS values and/or security demands. This provides the advantage that the first network slice is not slowing down the capabilities of the VPC or that the first network slice is causing a lower security level.

According to a fourth aspect of the invention, a method of setting up a network slice in a network between a UE and a VPC of a customer within the cloud of a cloud provider is disclosed, the method comprising the following steps:
Providing a connectivity-management entity described above, wherein the cloud-slice management API of the connectivity-management entity offers available network slice specifications of the network, wherein a first network slice specification is selected from the available network slice specifications and wherein a request of the first network slice specification is sent to the cloud-slice management API, in particular by using configurations, wherein the cloud-slice management API forwards the request to a slice-service-orchestration module of the connectivity-management entity, wherein the slice-service-orchestration module provides a first communication interface to the network of a network operator, wherein the slice-service-orchestration module sends signals or sends commands to the network so that the network starts a set-up process of the first network slice with the first specification.

This basically provides advantages as already described above.

In the following, preferred implementation examples of the present invention are explained with reference to the accompanying figure:
- Fig. 1:: shows a communication system according to the invention;
- Fig. 2:: shows a communication flow of an order of a network slice that uses the communication system of Fig. 1;
- Fig. 3:: shows a communication flow of the management of UEs, and/or subscribers in order to use this network slice of Fig. 2.
- Fig. 4:: shows a variation of the communication system of Fig. 1.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

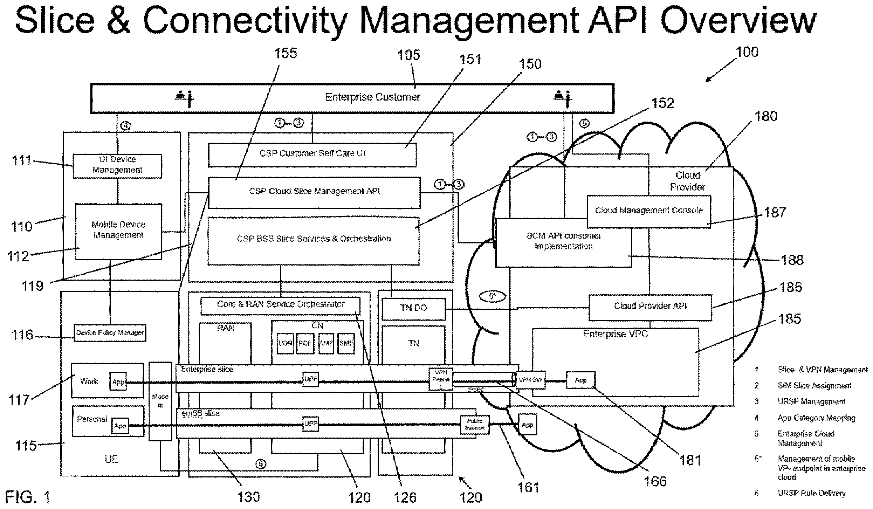

Fig. 1 shows a communication system 100 according to the invention. The communication system 100 comprises:
- a customer 105,
   ∘ wherein the customer 105 has technical means, in particular by using devices with appropriate interfaces, to communicate with a device management entity 110, with a connectivity management entity 150, and/or with a cloud provider 180;
- the device management entity 110 that can be associated to the customer 105 can comprise a UI device management module 111 and a mobile device management module 112. The functionalities 111, 112 can be implemented as algorithms on the device management entity 110; by using the III device management module 111 the Enterprise customer 105 can specify which devices like UEs shall have access to the cloud provider 180, which applications respective UEs can use and/or QoS values require for each combination of UE and which application; of the mobile device management module 112 can be linked to the UI device management module 111 to receive those specifications. The mobile device management module 112 can also be linked to a UE at 115 to receive requests and/or requirements from the UE 115, in particular from a device policy manager 116 of the UE; as will be described below in greater detail, the mobile device management module 112 can also be linked to a cloud-slice management API 155 of the connectivity management entity 150;
- the UE 115 that can be associated to the customer 105 and can comprise the device policy manager module 116, a first application 117 that is related to the work of a user of the UE 115 and a second application 118 that is related to personal service for the user of the UE 115. The first application 117 can belong to the enterprise customer 105; The module 116 and/or the applications 117, 118 can be implemented as an algorithm on the UE 115; the UE 115 comprises interfaces, in particular mobile interfaces, to communicate, in particular by using the 5G or later standard, with a network operator 120;
- a network operator 120, in particular a CSP 120, that comprises a core network 125, in particular a 5G core 125 or a later standard core, and a RAN 130. In general, the core network 125, the RAN 130, and/or the transport domain make up a network 133 of the network operator 120. The core 125 and the RAN 130 can establish communication links 160, 161 for the UE. The first communication link 160 can be a first network slice 160 that is associated to the first application 117 and connects the UE to a virtual private cloud (VPC) 185 of the enterprise customer 105 that is located within the cloud the cloud provider 180; the second communication link 161 can be a second network slice 161 that is associated to the second application 118 and connects the UE 115 to other termination points of the Internet; the network operator 120 also comprises a connectivity management entity 150 that is configured to set up and/or manage the first network slice 160 and/or the second network slice 161. The connectivity management entity 150 can - as will be explained in greater detail - signal to a core & RAN service orchestrator 126 the specifications of the first network slice 160 and/or the second network slice 161 to the core 125 and the RAN 130;
- the cloud provider 180, wherein the cloud provider 180 offers network services 181, in particular NaaS products 181 as Apps, to the enterprise customer 105, in particular by providing these services within the virtual private cloud 185; the cloud provider 180 can also comprise a cloud provider API 186 to communicate with the network operator 120, a cloud management console 187 and/or a SCM API consumer implementation 188. The SCM API consumer implementation 188 can communicate with the enterprise customer 105 and with the connectivity management entity 150;

The connectivity management entity 150 provides the functionality that the various administration points and/or decoupled workflows when setting up the communication, in particular the first network slice 160, between the UE 115 and the virtual private cloud (VPC) 185 order to have access to the NaaS product 181. For that purpose, the connectivity management entity 150 comprises a (CSP) customer-self-care UI module 151, the cloud-slice management API 155 and/or a BSS slice service & orchestration module 152. The BSS slice service & orchestration module 152 communicates required and/or ordered slice configurations to the core & RAN service orchestrator 126 that initiates the slice accordingly.

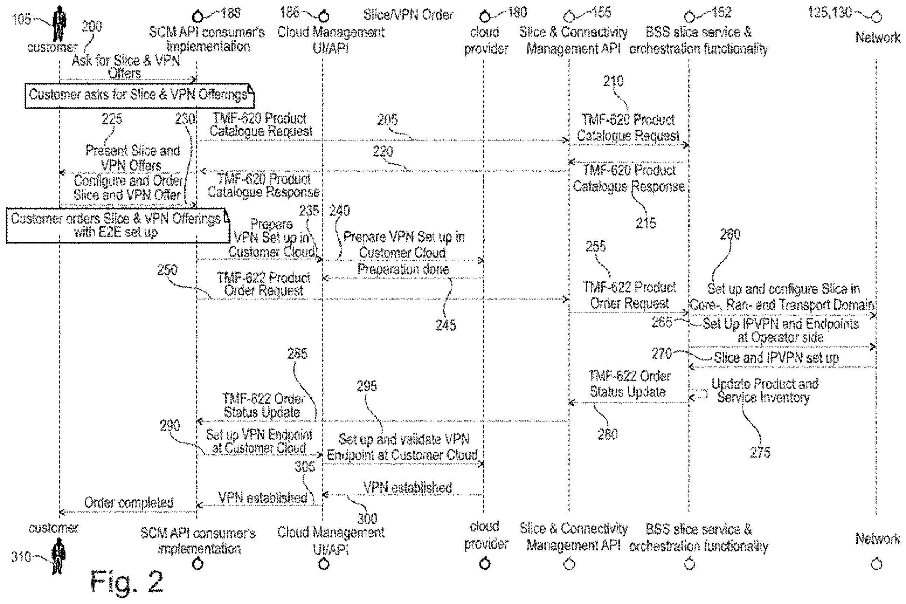

The numbers 1 to 5 within the Fig. 1 and 2 indicate the various assignments and management functionalities that can be done over the respective interfaces - as specified in the figures.

The network operator 120 - that can also be named CSP 120 - can expose all slice-related connectivity management functions via the cloud-slice management API 155 to the mobile device management module 112 of the 110 device management entity, to the device policy manager 116 of the UE 115 (indicated by a data link 116), to the enterprise customer 105, and/or to the SCM API consumer implementation 188 of the cloud provider 180. Hence, possible configurations means are the mobile device management module 112 of the 110 device management entity, the UE 115, the customer-self-care module UI 151 (that can be assessed by the enterprise customer 105 e.g. via a web-interface), and/or to the SCM API consumer implementation 188 of the cloud provider 180.

The cloud-slice management API 155 serves as a central point, to which all those configuration means described above can request required communications demands like QoS values and/or VPN tunnel specifications. It enables that theses requested communications demands can be processed in an automated fashion.

The cloud-slice management API 155 can be integrated by any kind of consumers directly into customer-, cloud-provider- or mobile-device-management- processes supporting consistency, full automation, a unified view and single administration point. The integration of the SCM API can be done in various ways, such as
- an aggregator service by 3^{rd} parties to enterprises;
- an extension of the cloud management console 187 implemented by the cloud-provider 180;
- an extension of mobile device management tools done by the mobile device management provider by using the mobile device management module 112; and/or
- a customer-specific implementation directly integrated into the enterprise's device- and cloud management processes.

The cloud-slice management API 155 can expose available slices and/or tunnel configurations so that the above described configuration means can select those slices and/or tunnel configurations that best fits to the needs. In particular, the cloud-slice management API 155 can expose the available slices and/or tunnel configurations according to well-known standards like network-slicing-specific specializations for TMForum Open APIs Product Catalogue (TMF-622), Product Order (TMF-633) and Product Inventory (TMF-638)
- NaaS products 181 can include Slices & Mobile IP VPNs complemented by SIM related products such as slice subscription for a SIM, UE-ID subscription and/or a user-ID subscription, classical SIM Connectivity (e.g., Data Plan) and eSIM Management;
- the slice subscription for a SIM, UE-ID subscription and/or a user-ID subscription can also include policy information, i.e., the customer can indicate which mobile applications, UE, user can use the slice
- to achieve slicing product standardization over operators, the minimum set of attributes describing the above products can be achieved via TMForum-Domain Context specialization. That enables the use of NaaS management APIs over a global footprint;
- (tunneled) VPNs can be ordered as part of a network slice. For example, the first network slice 160 can be a shared one or be instantiated individually for the customer 105. The BSS slice service & orchestration module 152 can not only set up the VPN with the customer's DNN/APN () but also create and configure all required network functions in the Core Network-, Radio Access Network- and Transport-domain. The orchestration can be fully automated. Fig.1 shows a that the first network slice 160 is set-up as a dedicated enterprise slice 160 to connect the app 117 in the working profile to the VPC 185 of the enterprise customer 105 via an IPSEC tunnel 160a. The endpoint of the tunnel can be specified by the enterprise customer 105 by using the connectivity management entity 150; Public Apps 118 can use the shared emBB-slice 161 terminating in public internet.
- The enterprise customer 105 can define policies that specify which mobile application groups require or use which slice - this can be done per SIM Subscriber or on a general level (UE Route Selection Policies) as part of the product orders. According to the URSP Standard, the network operator can push these URSP rules to the UE 115 when it tries to establish a PDU session for a mobile application and will ensure that the traffic gets connected to the appropriate subscribed slice. The definition of which mobile application belongs to which URSP Application group can be done in the device policy manager functionality. Depending on set up of the enterprise customer 105, the device management could also reside in a cloud of the enterprise customer 105.
- dynamic parts regarding slice assignment and/or URSP policies can also be managed via the cloud slice management API; dynamic slice configuration can be used by the enterprise customer 105 to tailor the slices even more to specific, in particular to time and/or service dependent, requirements; to achieve this, the enterprise custom 105 can use any of the aforementioned configuration means; Furthermore, Aggregator-Services by 3^{rd} parties could use these APIs to offer a uniform management view via cloud services, mobile connectivity and mobile devices to enterprises. Providing these slice related connectivity functions via the cloud-slice management API 155 offers great flexibility in respect to individual usage scenarios.

Fig. 2 shows a communication flow of an order of a network slice that uses the communication system of Fig. 1. In particular Fig. 2 shows how the customer 105 can establish a network-slice-based private mobile network that securely terminates in the VPC 185 of the consumer 105 within the cloud of the cloud provider 180.

By providing slice specifications from the network operator 120 by using the cloud-slice management API 155, available Slice- & VPN offerings of the network operator can be communicated to the customer 105. These offerings can be communicated to the configuration means described above. It is possible that those configuration means prepare a unified administration view of the available Slice- & VPN offerings for the enterprise customer 105. The available Slice- & VPN offerings can be taken from the TMF-620 Product-Catalogue API to provide to them in a standardized way. VPN offers can be either modelled as an option on top of slice offerings or be included in the slice offering.

Slice- & related VPN offering specifications (including related Product- & Service Specifications) can be described by any combination of the characteristics below.
- GSMA NEST attributes, describing characteristics of the slice. This is the standard for slice specs today but it is might not be sufficient for a proper E2E management regarding the needs of the enterprise costumer 105. Further attributes (see below) allow a catalogue-driven and fully automated E2E management over slice-, device & cloud services;
- Slice Openness, indicating if a slice can only be accessed by UEs, 115, users, and/or SIMs belonging to the costumer 105 or is open for example to other SIM owners. This is an important feature to manage access to the slice and enable B2B2X business models. E.g., slice openness can be used to specify policies for "bring-your-own" devices (private devices owned by employees) that gain access to enterprise slices for only enterprise applications. Another model can be to open the slice for mobile applications sold by the enterprise to end-consumers.

- Slice Access Type, indicating if an access to a slice is either only granted via dedicated Slice Access products or is configured in generic slice access services by indicating the slice ID (SST, SD). The first ensures best controlled chargeability of slice access, whereas the latter enables easiest access for dynamic scenarios in which slice access for SIM Subscribers is needed only after slice creation without the effort and delay of a manual product-configuration & -release process;
- SST and SD, Slice Service Type (SST) and Slice Differentiator (SD);
- DNN: data network name of the private mobile IPVPN;
- Mobile IPVPN related attributes, including public IPs for VPN endpoints, VPN secret, IP Range in the customer cloud which can be reached from mobile devices using the slice, IP ranges to be assigned to mobile devices, information on cloud-tenant location, redundancy information etc.

The catalogue of Slice- & related VPN offering specifications can also indicate, which of the above characteristics are fixed in the product offering (e.g., latency or bandwidth-related characteristics) and cannot be changed, which can be configured by the customer (e.g., DNN, number of devices for which slice is used or service area for radio access) and which are assigned dynamically during order fulfilment (e.g., SD).

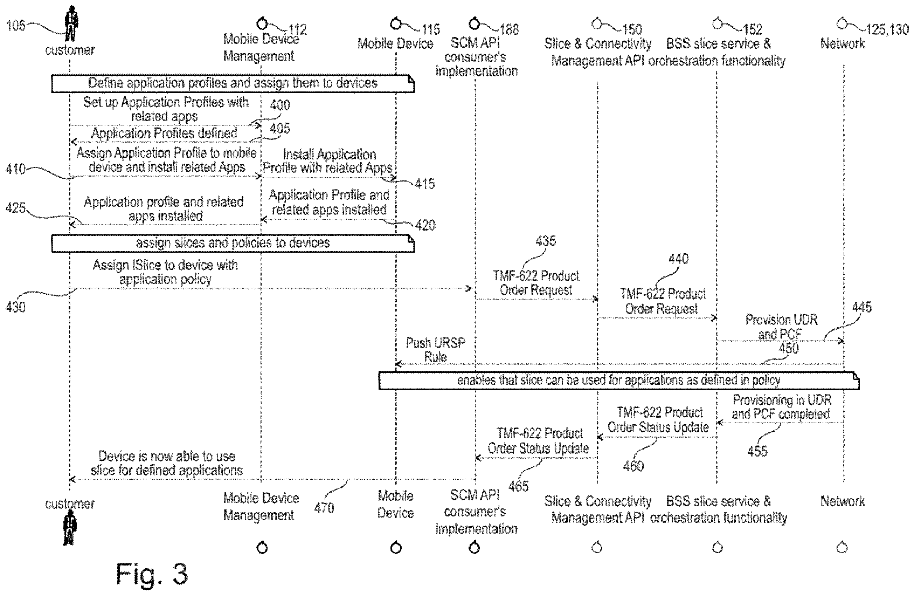

The steps, which are described in the following in the context of Fig. 2 and Fig. 3 only need to be executed in the shown order if this is technically necessary.

Hence, in step 200 the consumer 105 can ask for slice and VPN offerings for example by using the SCM API consumer implementation 188 or any other of the configuration tools. In particular, this can be a request regarding the TMF-620 product catalog.
In step 205, the SCM API consumer implementation 188 or any other of the configuration tools transmit this request to the cloud-slice management API 155.
In step 210, the cloud-slice management API 155 transmits the request to the BSS slice service & orchestration module 152.
In step 215, the BSS slice service & orchestration module 152 transmits the available slice and VPN offerings, in particular according to the TMF-620 product catalog, to the cloud-slice management API 155;
In step 220, the cloud-slice management API 155 sends the available slice and VPN offerings back to the SCM API consumer implementation 188 or to any other of the configuration tools;
In step 225, the available slice and VPN offerings are presented to the enterprise customer 105.
In step 230, the enterprise customer 105 can configure and order slice and VPN offerings accordingly via the SCM API consumer implementation 188 or via any other of the configuration tools;
In step 235, the VPN set up is being prepared within the cloud environment by the cloud provider 180 by sending the corresponding configuration data from the SCM API consumer implementation 187 to the cloud management API 186 of the cloud provider 180;
In step 240, the cloud management API 186 of the cloud provider 180 prepares the VPN setup, in particular in the enterprise's VPC 185;
In step 245, a signal is created within the cloud 180 that the preparation of the VPN has been done and the signal is sent to the cloud management API 186;
In step 250, the SCM API consumer implementation 188 performs the slice and VPN request towards the cloud-slice management API 155, the request is in particular a TFM-622 product order request;
In step 255, the cloud-slice management API 155 transmits the slice and VPN request to the BSS slice service & orchestration module 152;
In steps 260-275, the BSS slice service & orchestration module 152 transmits these orders to the other parts of the network, in particular to the core & RAN service orchestrator 126, wherein the core & RAN service orchestrator 126 sets up and configures the network slices according to the request in the core domain, in the RAN domain and in the transport domain of the network operator 120; additionally a set up of IPVPN and endpoints at the operator side is being performed. Acknowledgment of the setup of the network slice and the IPVPN is being signaled to the BSS slice service & orchestration module 152, wherein the BSS slice service & orchestration module 152 can perform a product and service inventory update;
In step 280, the slice and VPN update, in particular a TMF-622 order status update, is sent to the cloud-slice management API 155;
In step 285, the slice and VPN update, in particular a TMF-622 order status update is sent from the cloud-slice management API 155 to any of the configuration means, in particular to the SCM API consumer implementation 188;
in steps 290-295, the setup of the VPN endpoints, that was prepared before, is being performed by the cloud provider API 186;
in steps 300-305, the an (successful) establishment of the VPN is being signaled to the configuration means, in particular to the SCM API consumer implementation 188;
In step 310, (successful) ordering of the slice and VPN request being signaled to the customer 105 so that usage of the NaaS product 181 can start;

The basic principle of Fig. 2 can also be described as follows:
Based on the TMF-620 catalogue-information, a proper order configuration process by consumers 105 of the configuration means, in particular of the SCM API consumer implementation 188, is enabled.

To configure the VPN part, some preparation might be needed in the customer's cloud tenant, e.g., to reserve public IPs for the VPN endpoint at the customer's side. This can be done from a unified view that integrates the configuration means, in particular of the SCM API consumer implementation 188. Alternatively, the customer 105 can manually prepare it via the Cloud Management UI/Console 187.

The order configuration performed by using any of the configuration means can include at least a subset of all attributes indicated as configurable and mandatory in the slice offer. In particular, all relevant information about the IPVPN and IPSec tunnel and forwarding rules at the side of the network operator 120, the CSP 120, is required, e.g. public IPs at customer's side or reachable IP range at customer's cloud. The VPN secrets can either be provided by the customer or (if not present) automatically assigned in the fulfilment process.

The order with all configured attributes can be placed as a TMF-622 Product Order API to the CSP 120. Based on the information provided by the enterprise customer 105, slice and Mobile IPVPN with endpoint at the CSP 120 will be set up. It is decided if the customer gets a dedicated slice instance or uses a shared one, depending on isolation requirements in the slice order configuration.

CSP 120 product- and service order orchestration, that means the BSS slice service & orchestration module 152, can be a catalogue- and model-driven process and can be fully automated.

Once CSP fulfilment is completed, a respective product instance is activated and the order status is provided to the customer 105. The customer 105 can access information which was dynamically assigned during the fulfilment process either via order status updates or TMF-637 Product Inventory API. That includes the slice ID (SST + SD) which was assigned and is needed to manage access of devices to the slice. Also, the public IP(s) assigned on the CSP side and/or the (optionally) VPN secrets are provided, which is important to finish the set-up of the VPN endpoint at the customer's cloud tenant. This can be done from a unified administration UI that integrates the cloud-slice management API 152, or alternatively manually by the enterprise admin via the cloud management console 187. The first is the most convenient for the customer 105 while the latter allows an individual set up.

In addition to using cloud-slice management API 152, the enterprise customer 105 can also manage everything via the CSP's Customer-Self-Care UI 151, which uses the same cloud-slice management API 152. When ordering slice and VPN in this scenario, the customer 105 can decide if he wants to set up the VPN endpoint in their cloud themselves, based on the information provided in the CSC-UI. Alternatively, the BSS slice service & orchestration module 152 can support setting up the enterprise's VPN endpoint by using the cloud-provider's management APIs (see 5a in Fig. 1). However, in that case the authorization to access the customer's cloud tenant must be granted, either by aligned trust and federation of accounts between the cloud provider 180 and the CSP 120, or by the enterprise customer 105 providing his cloud account credentials to the CSP 120.

The description above focused on slice and VPN creation. The further lifecycle with modifications and final termination is supported by respective actions in TMF-622 and inventory information provided in TMF-637 Product Inventory Management.

Fig. 3 shows a communication flow of the management of UEs, and/or subscribers in order to use this network slice of Fig. 2.

The customer 105 can manage which UEs 115, applications 116, 117 and/or subscribers can access one or more network slices. This can be flexibly managed by using the cloud-slice management API 155 and can therefore be integrated into the administration processes of the customer 105. The customer 105 can integrate the respective interaction with the cloud-slice management API 155 into his mobile device management 112, the respective application context or their unified administration view on devices, connectivity and cloud. The sequence diagram of Fig. 3 gives a simplified view on how access to slices for mobile device applications can be managed, based on the use of an aggregated view of the SCM API consumer implementation 188.
In steps 400-410, the consumer 105 sets up an application profile by specifying which UEs 115, applications 116, 117 and/or users (for example employees of the enterprise customer 105) have which access rights and/or QoS requirements; this application profile is transmitted to the mobile device management module 112; in particular in step 410, it is possible to signal to the mobile device management module 112 to install related applications on the UE 115;
In steps 415 to 420, the mobile device management module 112 installs the appropriate applications on the UE and the UE signals if this process was successful or not;
In step 425, the mobile device management module 112 signals to the consumer 105 that the application profile has been set up and that the related apps have been installed on the respective UEs 115;
In Step 430, based on the application profile, the consumer 105 creates an application policy to assign the network slices, in particular the network slices that have been created within the context of Fig. 2, to UEs 115, applications 116, 117 and/or users. UEs can be identified based on Mac ports, UE serial numbers and/or (e)SIM subscriber data. Users can be identified by using credentials. Applications can be identified by application IDs. For example, the application policy can be to assign to combination of the user "Max Mustermann"; App "App1" a first network slice with low latency properties and to the combination of the user "Hanna Musterfrau"; App "App2" a second network slice with high-bandwidth properties. This application policy is transmitted from the consumer 105 any of the configuration means, in particular to the SCM API consumer implementation 188;
In step 435, the configuration means, in particular the SCM API consumer implementation 188, performs a request, in particular by using a TMF-622 product on a request, to apply the application policy to the cloud-slice management API 155;
In steps 440-450, the cloud-slice management API 155 transmits the application policy to the BSS slice service & orchestration module 152, wherein the BSS slice service & orchestration module 152 triggers the provision of appropriate UDR and PCF configurations of the network 125, 130 according to the application policy; wherein the network 125, 130 pushes corresponding URSP rules to the UEs 115, which enables that network slices can be used as defined in the policy;
In steps 455-465, the network 125, 130 completes the UDR and PCF provisioning and sends an appropriate update of the successful provisioning to the BSS slice service & orchestration module 152, which forwards the update, in particular a TMF-622 product order status update, to the cloud-slice management API 155 that forwards the update to any of the configuration means, in particular to the SCM API consumer implementation 188;
In step 470, the configuration means signals to the customer 105 that the UE 115 is now able to use the network slice for defined applications;

The basic principle of Fig. 3 can also be described as follows:
Regarding the management of application profiles and the definition of application policy rules: As the solution is based on 3GPP URSP technology, first, the enterprise costumer 105 can set up URSP application types/profiles and assign related mobile applications to them. For example, an application profile for standard office communication can be set up comprising web conferencing apps, email etc. A profile for low-latency apps could be set up including for example a field worker's AR app. Application profiles can be assigned to mobile devices, triggering the role-out of respective applications on the individual device. Both administration cases are supported by known mobile device management solutions but have not been used as the invention does.

Via any of the configuration means, in particular the SCM API consumer implementation, the enterprise customer 105 can grant access to a specific network slice for a well-defined SIM Subscriber (and his related device). Furthermore, the enterprise can indicate for which URSP Application Types/Profiles an available network slice shall be used.

This can in particular be done by specifying the application policy, that can be placing the respective TMF-622 Product Order. The underlying product is a "slice access product". These "products" can comprise the following characteristics:
- SIM Subscriber Identity, e.g., SUPI or IMSI;
- Slice to be accessed given by SST, SD;
- DNN, Data Network Name of private Mobile IPVPN where mobile traffic is to be terminated;
- Charged Party, indicating who will be charged for the usage of the slice and enabling traffic sponsoring models;
- OSID, indicating the operating system of mobile device;
- OSAppID(s) indicating URSP application profiles for which slice is to be used;

Optionally quality profile related information (5QI etc.) can be provided if not already determined by the slice. Also, further information regarding target-IPs to be used in the URSP rule might be included.

At least OSID and OSAPPID should be configurable by the customer 105 when order the NaaS. SST, SD and DNN could be fixed in the product specification or might also be configurable by the customer for respective Slice Access Types (see Slice Specification).

A separation of Slice Products and Slice Access Products as implemented in the cloud-slice management API 155 enables B2B2X models in which the SIM and the slice/cloud application are owned by separate parties. This is not the case when including related SIMs in the Slice Service, as seen in other contexts. For example, models where the slice/application owner sponsors the traffic on is slice for his application are supported in our set up.

The order with all configured attributes can be placed via TMF-622 product Order API to the CSP 120, where authorization of slice access (according to slice openness) is validated. If the customer is entitled to assign the SIM to the slice, the slice is subscribed for the SIM in the UDR. Also the URSP ruleset provisioned for the SIM Subscriber in the PCF is to be adapted according the product order configuration. This means that a URSP rule can dynamically be created if not already existing, granting access to the slice for the respective OSID, OSApp-ID. This rule can be added to the URSP Ruleset assigned to the SIM Subscriber.

Once the URSP-ruleset assigned to the SIM is updated, the network will push it to the device and the operating system of the UE 115 is configured to ensure that related apps will automatically use the (newly) assigned slice.

Termination of the slice access can be done by using respective TMF-622 orders with delete-action.

Besides the static provisioning for general device usage, the cloud-slice management API 155 is configured to allow dynamic, need-driven and time-constrained improvement of the device connectivity experience in a respective context, e.g. for a field worker needing improved connectivity for his AR-App at a remote site.

The cloud-slice management API 155 can be integrated in the customer's device management environment or a unified administration view for mobile connectivity, devices and cloud applications.

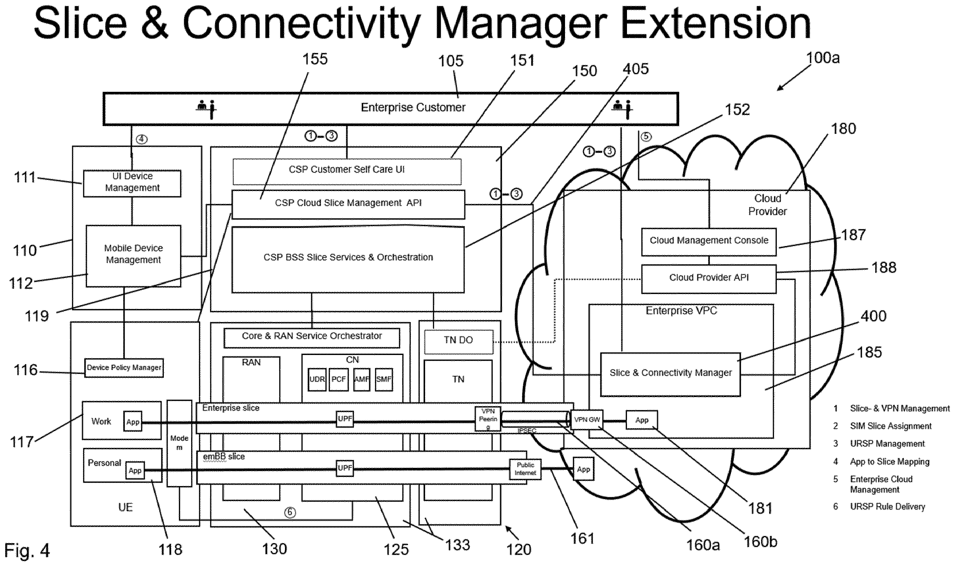

Fig. 4 shows as variation of the communication system of Fig. 1 a communication system 100a.

The communication system 100a differs from the communication system 100 in that a mechanism is offered to the enterprise customer 105 to deploy a slice-connectivity manager 400 into the VPC 185 of the customer 105 within the cloud of the cloud provider 180.

The slice-connectivity manager is for setting-up a network slice in a network (133), wherein the slice-connectivity manager (400) is a virtual software implementation within a VPC (185) of a customer (105) in the cloud (180) of a cloud provider, wherein the slice-connectivity manager (400) comprises a data link (405) to a cloud-slice management API (152), wherein the slice-connectivity manager (400) is configured to obtain available network slice specification via the data link (405) and/or is configured to request of a network slice (160) having first specifications via the data link (405) to the cloud-slice management API (152). In particular, the network slice (160) is designed as a VPN tunnel. Hence, the slice-connectivity manager (400) can also be a configuration means, the slice-connectivity manager (400) is associated, controlled and/or provided by the network operator (120) of the network (133).

A functionality of the slice-connectivity manager 400 is basically similar to the SCM API consumer implementation 188 in that sense that it has a data connection to the cloud-slice management API 155 and in that the slice-connectivity manager 400 can communicate with the cloud-slice management API 155 to order, configure, set-up and/or manage network slices as described before. The slice-connectivity manager 400 is provided by the CSP 120 like the Self-Care-UI but runs in the customer's cloud tenant, which is the VPC 185. Differences are that there is no need for the enterprise to implement a SCM API integration but that the slice-connectivity manager 400 is simply rolled out into the VPC 185. Another difference is, as will be explained in detail below, that is possible to set up a VPN tunnel 106a without the need to share user credentials of having access to the NaaS product/APP 181 with the CSP 120, because the slice-connectivity manager 400 is associated to the CSP 120 in acts like a trojan horse within the VPC 185.

The deployment of the slice-connectivity manager 400 can be triggered either manually (e.g. by offering a software script via mail or download) or automatically (e.g. as a result of an ordering process).
- the slice-connectivity manager 400 can be configured to provide a web-based UI, wherein the customer 105 can authenticate himself with his credentials of the CSP 120 and is then able to order, modify and terminate NaaS-related products as described above.
- the slice-connectivity manager 400 can order network slices, in particular by using the CSP TMForum APIs as described above; to manage the NaaS products 181 of the customer 105;
- as the slice-connectivity manager 400 runs in the VPC 185 of the customer 105 in the cloud of the cloud provider, all customer cloud environment information is available, and the slice-connectivity manager 400 can manage NaaS-related Cloud elements without the need to exchange customer cloud account credentials with the CSP 120. For instance, a respective VPN endpoint 160b can be set up in the VPC 185 of the customer 105, which connects to the mobile IP-VPN set up at the CSP side wiothout the need to need to exchange customer cloud account and/or NaaS product 181 credentials.

In order to make the Slice & Connectivity Manager usable for customers, first, new computing resources need to be instantiated in the customers cloud account. Secondly, the Slice & Connectivity Manager software needs to be deployed onto these new computing resources.

The automation of both tasks is key to an easy and seamless customer experience .

The deployment of the Slice & Connectivity Manager into the customers VPCs is done by combining infrastructure-as-code (IaC) tools such as Terraform, AWS CloudFormation or Microsoft PowerShell DSC together with deployment automation. These IaC tools allow the orchestration and automation of creating, reading, updating and deleting of (computing) resources in the cloud. This is done by first describing the configuration in templates and second instantiating the resources by executing the configuration templates. Usually the execution is done via command line interface while the description is written in e.g. JSON or YAML (AWS CloudFormation) or HCL (HashiCorp Configuration Language - which is used especially for Terraform and similar to JSON).

The deployment of the SCM software can be done with software deployment automation tools such as Octopus Deploy, Jenkins or Ansible. Some cloud providers such as Amazon and Google offer tools specific to their cloud environments.

Enhancement of the cloud management console 187 of the cloud provider 180: Depending on agreements between the public Cloud provider and the CSP 120, the functionality for managing and/or configuring NaaS products 181 can be integrated into the cloud management console 187 of the cloud provider 180 so that a unified administration view is provided in the cloud management console 187 of the cloud provider 180.

Enhancement of URSP Rule Management: Besides the simple URSP Rule creation as described above, the APIs can be enhanced so that the enterprise costumer 105 can flexible define any URSP Rules and Rulesets. In that case, SIM provisioning can support an additional separate service order allowing to change the URSP Rule set assigned to a SIM Subscriber. The Slice-Access-product can still be used but instead of using OSID, OSApp-ID as attributes, the enterprise costumer 105 can provide a ID of the new Ruleset to be applied with the slice subscription.

Support of advanced security mechanisms: The previous embodiments are based on the usage of IP-Sec based VPNs between DNN/UPF and VPC 185. Support of advanced security mechanisms: The previous embodiments are based on the usage of IP-Sec based VPNs between DNN/UPF and VPC 185. In addition, a Software-defined Wide Area Network (SD-WAN) can be used to establish a connection between DNN/UPF and VPC 185. Also more advanced security mechanisms based on ZTNA (zero-trust-network-access) or SDP (Software Defined Perimeter) can be combined with network slicing in a similar way.

The invention, in particular the described embodiments of the invention, also provide the following advantages:
- Consistency of all configurations at operator- and enterprise side is ensured by employing a common, one-stop provisioning flow that covers the domains connectivity, network, mobile device application connectivity and cloud. Customers can manage their slicing product inventory in a consistent and simple way from the context which is best fitting for them;
- Speed is increased by a fully automated implementation, i.e., all manual process steps can be eliminated;
- Independence from the CSP is minimized as the enterprise can initiate all changes API-based, without the need for manual CSP interaction, from its cloud environment or the CSP's Customer-Self-Care;
- Future-Proofness is ensured as 5G network slicing mechanisms such as URSP, slice orchestration and SIM Subscriber Slice subscription are incorporated in the solution, and/or
- Security is increased.

## Claims

1. A connectivity-management entity (150) comprising:
• a slice-service-orchestration module (152), wherein the slice-service-orchestration module (152) provides a first communication interface of a network operator (120), wherein the slice-service-orchestration module (152) is configured to send signals to the network (130) so that the network starts a set-up process of a first network slice with a first specification;
• a cloud-slice management API (155), wherein the cloud-slice management API (155) provides a second communication interface to configuration means, wherein the cloud-slice management API (155) is configured to expose available network slice specification to the configuration means and/or wherein the cloud-slice management API (155) is configured to receive a request of a network slice (160) having the first specifications and forward the first specification to the a slice-service-orchestration module (152).

2. The connectivity-management entity (150) of claim 1, wherein the connectivity-management entity (150) is located within the environment of the network of a first network operator and is controlled by the first network operator.

3. The connectivity-management entity (150) of any of the claims, wherein the connectivity-management entity comprises a customer-self-care UI module (151) as a configuration means (151).

4. The connectivity-management entity (150) of any of the claims, wherein the exposed available network slice and/or the requested first specifications corresponds to a common standard, in particular according to a TMF-620 and/or a TMF-622 product catalogue.

5. The connectivity-management entity (150) of any of the claims, wherein the first specifications of the first network slice (160) comprises QoS requirements, information to set up a VPN tunnel, and/or IP addresses.

6. The connectivity-management entity (150) of any of the claims, wherein application policies are provided via the cloud-slice management API (155), wherein the application policies comprise information which APP (177), UE (115), user and/or IMSI is allocated to which network slice.

7. The connectivity-management entity (150) of claim 1 or 6, wherein the application policies and/or the first specifications are adjusted dynam ically.

8. A network-slice-configuration system comprising
• a connectivity-management entity (150) of claim 1;
• configuration means (188, 112, 115, 188), wherein the configuration means are configured to obtain network slice specification and/or to send a request of a network slice having the first specification to the cloud-slice management API (155).

9. The network-slice-configuration system of claim 8, wherein the configuration means (188, 112, 115) comprises: a mobile device management module (112) of a device management entity (110), a UE (115), and/or a SCM API consumer implementation (188) of a cloud provider (180).

10. The network-slice-configuration system of claims 8 to 9, wherein the first specification of the first network slice is specified by user input and/or is automatically be provided by an app (117) of the UE and/or by an operating system of the UE (117).

11. A communication system comprising
• a network-slice-configuration system of claim 12;
• a network (133) of a network operator (120);
• a cloud (180) of a cloud provider, wherein a VPC of a customer (105) is instantiated within the cloud (180) to provide a service to the costumer (105);
• a UE (115) configured to run a service and/or a app (117),
wherein the first network slice (160) with the first specifications provides a communication link between the UE (115) and the VPC (185) of a customer (105).

12. The communication system of claim 13, wherein the network (133) is configured to adjusts properties of its RAN network (130), its core network (125) and/or its transport network in the set-up process according to the first specifications.

13. The communication system of any of the claims 11 to 12, wherein the specification of the first network slice are set to match communication properties, in particular properties of a second network slice, of the VPC (185).

14. The communication system of any of the claims 12 to 13, wherein the specification is set to meet the highest requirements possible regarding QoS values and/or security demands.

15. A method of setting up a network slice in a network (133) between a UE (115) and a VPC of a customer (105) within the cloud (180) of a cloud provider comprising the following steps:
Providing a connectivity-management entity (150) of claim 1,
wherein a cloud-slice management API (155) of the connectivity-management entity (150) offers available network slice specifications of the network (133), wherein a first network slice specification is selected from the available network slice specifications and wherein a request of the first network slice specification is sent to the cloud-slice management API (155), in particular by using a configurations means (188, 112, 115, 151), wherein the cloud-slice management API (155) forwards the request to a slice-service-orchestration module (152) of the connectivity-management entity (150), wherein the slice-service-orchestration module (152) provides a first communication interface to the network (133) of a network operator (120), wherein the slice-service-orchestration module (152) sends signals to the network (130) so that the network starts a set-up process of the first network slice with the first specification.

## Amended claims

### Amended claims in accordance with Rule 137(2) EPC.

1. A connectivity-management entity (150) comprising:
• a slice-service-orchestration module (152), wherein the slice-service-orchestration module (152) provides a first communication interface of a network operator (120), wherein the slice-service-orchestration module (152) is configured to send signals to the network (130) so that the network starts a set-up process of a first network slice with a first specification;
• a cloud-slice management API (155), wherein the cloud-slice management API (155) provides a second communication interface to configuration means, wherein the cloud-slice management API (155) is configured to expose available network slice specification to the configuration means and/or wherein the cloud-slice management API (155) is configured to receive a request of a network slice (160) having the first specifications and forward the first specification to the a slice-service-orchestration module (152).

2. The connectivity-management entity (150) of claim 1, wherein the connectivity-management entity (150) is located within the environment of the network of a first network operator and is controlled by the first network operator.

3. The connectivity-management entity (150) of any of the claims 1 to 2, wherein the connectivity-management entity comprises a customer-self-care UI module (151) as a configuration means (151).

4. The connectivity-management entity (150) of any of the claims 1 to 3, wherein the exposed available network slice and/or the requested first specifications corresponds to a common standard.

5. The connectivity-management entity (150) of any of the claims 1 to 4, wherein the first specifications of the first network slice (160) comprises QoS requirements, information to set up a VPN tunnel, and/or IP addresses.

6. The connectivity-management entity (150) of any of the claims 1 to 5, wherein application policies are provided via the cloud-slice management API (155), wherein the application policies comprise information which APP (117), UE (115), user and/or IMSI is allocated to which network slice.

7. The connectivity-management entity (150) of claim 1 or 6, wherein the application policies and/or the first specifications are adjusted dynamically.

8. A network-slice-configuration system comprising
• a connectivity-management entity (150) of claim 1;
• configuration means (188, 112, 115, 188), wherein the configuration means are configured to obtain network slice specification and/or to send a request of a network slice having the first specification to the cloud-slice management API (155).

9. The network-slice-configuration system of claim 8, wherein the configuration means (188, 112, 115) comprises: a mobile device management module (112) of a device management entity (110), a UE (115), and/or a SCM API consumer implementation (188) of a cloud provider (180).

10. The network-slice-configuration system of claims 8 to 9, wherein the first specification of the first network slice is specified by user input and/or is automatically be provided by an app (117) of the UE and/or by an operating system of the UE (117).

11. A communication system comprising
• a network-slice-configuration system of claim 8;
• a network (133) of a network operator (120);
• a cloud (180) of a cloud provider, wherein a VPC, virtual private cloud, of a customer (105) is instantiated within the cloud (180) to provide a service to the costumer (105);
• a UE (115) configured to run a service and/or a app (117),
wherein the first network slice (160) with the first specifications provides a communication link between the UE (115) and the VPC, virtual private cloud, (185) of a customer (105).

12. The communication system of claim 11, wherein the network (133) is configured to adjusts properties of its RAN network (130), its core network (125) and/or its transport network in the set-up process according to the first specifications.

13. The communication system of any of the claims 11 to 12, wherein the specification of the first network slice are set to match communication properties, in particular properties of a second network slice, of the VPC, virtual private cloud, (185).

14. The communication system of any of the claims 12 to 13, wherein the specification is set to meet the highest requirements possible regarding QoS values and/or security demands.

15. A method of setting up a network slice in a network (133) between a UE (115) and a VPC, virtual private cloud, of a customer (105) within the cloud (180) of a cloud provider comprising the following steps:
Providing a connectivity-management entity (150),
wherein a cloud-slice management API (155) of the connectivity-management entity (150) offers available network slice specifications of the network (133),
wherein a first network slice specification is selected from the available network slice specifications and wherein a request of the first network slice specification is sent to the cloud-slice management API (155), in particular by using a configurations means (188, 112, 115, 151), wherein the cloud-slice management API (155) forwards the request to a slice-service-orchestration module (152) of the connectivity-management entity (150), wherein the slice-service-orchestration module (152) provides a first communication interface to the network (133) of a network operator (120), wherein the slice-service-orchestration module (152) sends signals to the network (130) so that the network starts a set-up process of the first network slice with the first specification.
